# EUROPEAN PATENT APPLICATION

(11) **EP 4 243 172 A1**
(43) Date of publication of application: **13.09.2023**
(21) Application number: 22818172.3
(22) Date of filing: 18.10.2022
(51) Int. Cl.: H01M 50/213, H01M 50/244, H01M 50/249

(54) **BATTERY CELL MODULE AND BATTERY SYSTEM**

(30) Priority: 29.01.2022 CN 202210113084; 29.01.2022 CN 202220244991 U
(71) Applicant: Eve Power Co., Ltd., Jingmen, Hubei 448000 (CN)
(72) Inventor: QIU, Wencong, Jingmen, Hubei 448000 (CN); JIANG, Jibing, Jingmen, Hubei 448000 (CN); LI, Fan, Jingmen, Hubei 448000 (CN); CHEN, Zhiwei, Jingmen, Hubei 448000 (CN); CHEN, Zhaohai, Jingmen, Hubei 448000 (CN)
(74) Representative: Murgitroyd & Company
(86) International application number: PCT/CN2022/125851
(87) International publication number: WO 2023/142541

(57) **Abstract**

The present application discloses a battery cell module and a battery system. The battery cell module includes a plurality of battery cell assemblies. Each of the battery cell assemblies includes a battery cell, an end cover, and a base. A first end of the battery cell is connected to the end cover, and a second end of the battery cell is connected to the base. End covers of adjacent ones of the battery cell assemblies are detachably connected to each other, and bases of the adjacent ones of the battery cell assemblies are detachably connected to each other. Each of battery cells is provided with one of the end covers and one of the bases, a plurality of battery cells are grouped by a detachable connection between adjacent end covers and a detachable connection between adjacent bases, which is convenient for assembly of the battery cell module and beneficial to improve relative position accuracy between the battery cells, thereby improving assembly accuracy of the battery cell module. By adopting the above battery cell module, the battery system has high processing precision and a reliable structure.

## Description

### CROSS-REFERENCE TO RELATED APPLICATIONS

This application claims priority to Chinese Patent Application No. 202210113084.4, filed on Jan. 29, 2022, and Chinese Patent Application No. 202220244991.8, filed on Jan. 29, 2022. The aforementioned applications are herein incorporated by reference in their entireties.

### TECHNICAL FIELD

The present application relates to the technical field of battery technologies, for example, to a battery cell module and a battery system.

### BACKGROUND

New energy vehicles have realized leap-style development, such as new energy vehicles adopting lithium batteries as motive power. Cylindrical battery cells of the lithium batteries are widely used in power systems. However, small capacity of a single battery cell leads to a large number of batteries in a single string.

In generally cylindrical battery cell modules, the battery cells are positioned by tooling and then bonded together through glues, which leads to inaccurate position of the battery cells and affects position accuracy of adjacent battery cells, thus resulting in a great cumulative tolerance.

In addition, for the battery cell modules in the related art, arrangement of a plurality of battery cells is not compact, and an overall size of the battery cells is great. In the related art, negative terminals of the battery cells of the battery cell modules are shielded. If a thermal runaway occurs in the battery cells, gas ejected from the battery cells cannot be discharged quickly, resulting in existence of potential safety hazards. Insulation is generally performed for busbars so as to avoid contact between the busbars and shells of the battery cells, resulting in high cost of the battery cell modules.

### SUMMARY

The present application provides a battery cell module and a battery system to solve a problem of inaccurate position of battery cells.

In a first aspect, a battery cell module is provided in embodiments of the present application, including a plurality of battery cell assemblies, wherein each of the battery cell assemblies includes a battery cell, an end cover, and a base, a first end of the battery cell is connected to the end cover, and a second end of the battery cell is connected to the base; end covers of adjacent ones of the battery cell assemblies are detachably connected to each other, and bases of the adjacent ones of the battery cell assemblies are detachably connected to each other.

In an embodiment, the end covers and the bases are provided with clamping parts, adjacent two of the end covers are clamped through the clamping parts, and adjacent two of the bases are clamped through the clamping parts.

In an embodiment, the end covers and the bases are prismatic structures, and each of side walls of the end covers and side walls of the bases is provided with one of the clamping parts.

In an embodiment, each of the end covers and the bases includes: a bottom plate, the bottom plate being a regular polygonal plate; and a plurality of side plates, wherein each of side edges of the bottom plate is connected to one of the side plates, and each of the side plates is provided with one of the clamping parts.

In an embodiment, a quantity of the plurality of side plates is an even number, among two opposite ones of the side plates, a first one of the side plates is provided with a clamping block as the clamping part, and a second one of the side plates is provided with a clamping slot as the clamping part.

In an embodiment, a width of the clamping slot is gradually increased along a radial direction of the battery cell towards inside of one of the side plates where the clamping slot is located, and a shape of the clamping block is matched with a shape of the clamping slot.

In an embodiment, the end covers and the bases are regular hexagonal prism structures.

In an embodiment, the battery cells are cylindrical; and each of the end covers and the bases is provided with an installation slot, the plurality of side plates and the bottom plate enclose to define the installation slot; each of ends of the battery cells is disposed in a corresponding one of installation slots, a side surface of the installation slot facing the battery cell is an arc-shaped surface matched with an outer wall of the battery cell, and a side surface of the installation slot away from the battery cell is a plane.

In an embodiment, each of middle portions of the side plates of the end cover and middle portions of the side plates of the base is provided with a notch, an opening of the notch on the end cover faces the base, and an opening of the notch on the base faces the end cover.

In an embodiment, the end cover is sleeved at the first end of the battery cell, a first via hole is defined on the end cover, and an electrode column of the battery cell is extended out of the end cover from the first via hole to connect with a busbar.

In an embodiment, the end cover is made of an insulating material and capable of supporting the busbar.

In an embodiment, a bottom plate of the end cover is an end cover bottom plate, the first via hole is defined on the end cover bottom plate, and the end cover bottom plate is provided with a flange surrounding the first via hole, and the flange is configured to support the busbar.

In an embodiment, the flange is provided with a position column matched with the busbar.

In an embodiment, the bottom plate of the base is a base bottom plate, the plurality of side plates of the base are connected to the base bottom plate, the plurality of side plates are circumferentially arranged around the base bottom plate to define the installation slot, and the second end of the battery cell is disposed in the installation slot; and the base further includes a pressure relief cavity communicated with the installation slot.

In an embodiment, the pressure relief cavity is defined in the base bottom plate, and the base bottom plate is provided with a second via hole communicated with the pressure relief cavity.

In an embodiment, the pressure relief cavity is provided with a plurality of pressure relief holes, and the plurality of pressure relief holes are respectively defined on the base bottom plate.

In an embodiment, the base bottom plate further includes: an upper plate, configured to support the battery cell; a lower plate disposed opposite to and at intervals with the upper plate, wherein the pressure relief cavity is defined between the top plate and the bottom plate, and the second via hole penetrates through the upper plate and the lower plate; and a plurality of reinforcing blocks disposed between the upper plate and the lower plate and arranged at intervals along a circumferential direction of the second via hole, wherein one of the pressure relief holes is defined between every two adjacent ones of the reinforcing blocks.

In an embodiment, a height of the pressure relief cavity ranges from 5 mm to 20 mm.

In an embodiment, both ends of the battery cell are fixedly bonded respectively with the end cover and the base.

In an embodiment, the base bottom plate of the base is provided with a plurality of gluing slots.

In an embodiment, the plurality of gluing slots are disposed on a top surface of the base bottom plate in contact with the second end of the battery cell and adjacent to an inner wall of the installation slot of the base.

In an embodiment, the pressure relief cavity is provided with a plurality of reinforcing blocks therein, each of the plurality of reinforcing blocks is respectively connected with a top surface and a bottom surface of the pressure relief cavity, and the plurality of gluing slots are disposed on and extended into the plurality of reinforcing blocks one by one.

In an embodiment, a width of each of the gluing slots is gradually increased towards outside of the installation slot along a radial direction of the battery cell.

In an embodiment, at least two adjacent ones of the end covers are connected and enclosed into a glue injection hole.

In an embodiment, the battery cell module further includes a foam adhesive layer and a structural adhesive layer stacked, and the foam adhesive layer and the structural adhesive layer are molded through the glue injection hole.

In a second aspect, a battery system is provided in embodiments of the present application, including any of the above-mentioned battery cell modules.

### Beneficial effects according to the embodiments:

According to the battery cell module provided by the present application, each of the battery cells is individually provided with one of the end covers and one of the bases, a plurality of battery cells are grouped by a detachable connection between adjacent end covers and a detachable connection between adjacent bases, which is convenient for assembly of the battery cell module and beneficial to improve relative position accuracy between the battery cells, thereby improving assembly accuracy of the battery cell module. After the battery cells are grouped, since adjacent bases are connected as a whole, adjacent end covers are connected as a whole, and the base and the end cover are respectively disposed on both ends of the battery cell, it is beneficial to improve structural strength and reliability of the battery cell module.

The base and the end cover are sleeved at the battery cell, an extension direction of the battery cell may be limited, which is beneficial to improved position accuracy of the battery cell and ensuring that a plurality of battery cells are parallel after they are grouped. The end cover is made of the insulating material, the busbar can be separated from a shell of the battery cell without insulation of the busbar, which is beneficial to reduce cost.

The pressure relief cavity is communicated with the installation slot, which can make gas generated by the battery cell enter the pressure relief cavity under circumstance of the thermal runaway and be discharged through the pressure relief holes to avoid burning or explosion of the battery cell.

By adopting the above-mentioned battery cell module, the battery system provided by the present application has high processing precision, low cost, and a reliable structure.

### BRIEF DESCRIPTION OF THE DRAWINGS

FIG. 1 is a partial schematic structural diagram of a battery cell module provided by Embodiment 1 of the present application.
FIG. 2 is schematic structural diagram of a battery cell, an end cover, and a base unassembled in Embodiment 1 provided by the present application.
FIG. 3 is a top view of two battery cells detachably connected through end covers provided in Embodiment 1 of the present application.
FIG. 4 is a schematic structural diagram of the battery cell module provided by Embodiment 1 of the present application.
FIG. 5 is a schematic structural diagram of unassembled battery cell module provided by Embodiment 1 of the present application.
FIG. 6 is a partial enlarged diagram of a location A in FIG. 1.
FIG. 7 is a schematic structural diagram of two battery cells detachably connected through end covers and bases provided in Embodiment 2 of the present application.
FIG. 8 is a schematic structural diagram of a base provided in Embodiment 3 of the present application.
FIG. 9 is a top view of the base provided in Embodiment 3 of the present application.

### Reference numerals:

1, battery cell; 11, electrode column; 2, end cover; 20 bottom plate; 21, end cover bottom plate; 211, first via hole; 22, side plate; 221, clamping block; 222, clamping slot; 223, groove; 224, glue injection hole; 225, notch; 23, flange; 231, position column; 24, installation slot; 3, base; 31, base bottom plate; 311, upper plate; 3111, second via hole; 3112, gluing slot; 312, lower plate; 313, reinforcing block; 314, pressure relief hole; 315, pressure relief cavity; 4, module cover; 5, integrate assembly; 51, busbar; 6, foam adhesive layer; 7, structural adhesive layer.

### DETAILED DESCRIPTION OF THE EMBODIMENT

In description of the present application, unless otherwise specified and defined, terms "connected with", "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal communication of two components or an interaction relationship between two components. For those skilled in the art, meanings of the above terms in the present application can be understood according to situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "up", "above", and "on" the second feature includes that the first feature is right above or obliquely above the second feature, or only indicate that a horizontal height of the first feature is greater than a horizontal height of the second feature. That the first feature is disposed "under", "below", or "underneath" of the second feature include that the first feature is right below or obliquely below the second feature, or only indicate that the horizontal height of the first feature is less than the horizontal height of the second feature.

In the description of this embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings.

### Embodiment 1

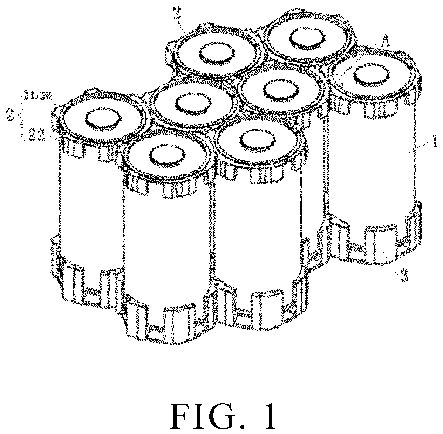

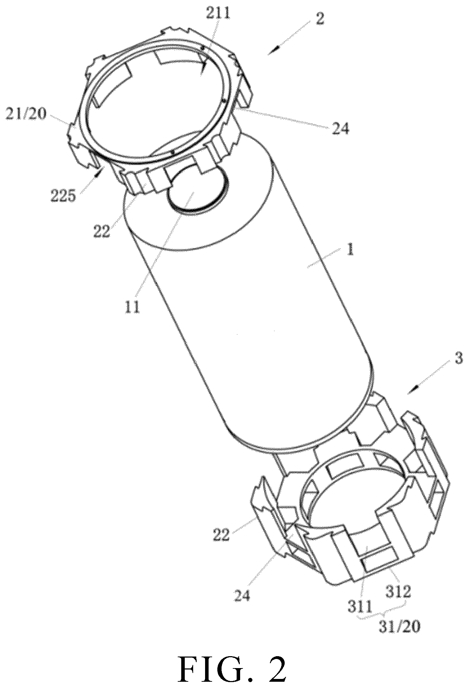

As shown in FIG. 1 and FIG. 2, a battery system including a battery cell module is provided in the embodiment. The battery cell module includes a plurality of battery cell assemblies, and each of the battery cell assemblies includes a battery cell 1, an end cover 2, and a base 3. A first end of the battery cell 1 is provided with the end cover 2, and a second end of the battery cell 1 is provided with the base 3. End covers 2 of adjacent two battery cell assemblies are detachably connected to each other, and bases 3 of the adjacent two battery cell assemblies are detachably connected to each other, so that the plurality of battery cells 1 are relatively fixed into a group. When the battery cell module is assembled, both ends of the battery cell 1 are first and respectively connected to the corresponding end cover 2 and the corresponding base 3, and then the plurality of battery cells 1 are grouped by a detachable connection among the end covers and a detachable connection among the bases.

In the embodiment, the battery cell module does not need to be positioned by tooling during an assembly process. Each of the battery cells 1 is individually provided with one of the end covers 2 and one of the bases 3, which makes grouping of the battery cells 1 more convenient. A detachable connection among the end covers 2 and a detachable connection among the bases 2 are beneficial to improve a relative position accuracy between the battery cells 1, so as to improve an assembly accuracy of the battery cell module. An assembly quantity of the battery cells 1 can be adjusted adaptively according to a capacity, and a size and a shape of a box body of the battery cell module, which makes grouping methods more flexible. After the battery cells 1 are grouped, since the end covers 2 are connected as an upper shelf, and the bases 3 are connected as a mower shelf, it is beneficial to improve structural strength and reliability of the battery cell module.

In the embodiment, the end covers 2 and the bases 3 are provided with clamping parts. Adjacent two end covers 2 are clamped through the clamping parts, so as to facilitate disassembly and assembly. And adjacent two bases 3 are clamped through the clamping parts, so as to facilitate disassembly and assembly.

The end cover 2 is disposed at a first axial end of the battery cell 1, and the base 3 is disposed at a second axial end of the battery cell 1, so that the end cover 2 and the base 3 respectively restrict the axial ends of the battery cell 1, which is beneficial to improve a position accuracy of the battery cell 1.

The end cover 2 and the base 3 are sleeved outside the battery cell 1, so that a structure of the end cover 2, the base 3, and the battery cell 1 is compact after assembly, which is conducive to reducing an overall size of the battery cell module.

Each of the end covers 2 and the bases 3 is provided with an installation slot 24. Each of the end covers 2 and the bases 3 includes a bottom plate 20 and a plurality of side plates 22. The plurality of side plates 22 and the bottom plate 20 enclose to define the installation slot 24. Each of ends of the battery cells 1 is disposed in a corresponding one of installation slots 24. By coupling of the battery cell 1 and the installation slot 24, a side wall of the installation slot 24 can limit an extension direction of the battery cell 1, so that it can be ensured that the plurality of battery cells 1 are arranged in parallel after the battery cells 1 are grouped, which further improves the position accuracy of the battery cell 1.

In order to improve a position effect of the installation slot 24 on the battery cell 1, a certain matching depth is required between the installation slot 24 and the battery cell 1. Optionally, a depth of the installation slot 24 in an axial direction of the battery cell 1 ranges from 5 mm to 20 mm, such as, 10 mm, 12 mm, 15 mm, or 18 mm.

Optionally, both ends of the battery cell 1 are glued respectively to the installation slot 24 of base 3 and the installation slot 24 of end cover 2 to simplify the structures of base 3 and end cover 2. Thus, on basis of meeting requirements of fixing the battery cell 1 with the base 3 and the end cover 2, a structure of the battery cell 1 cannot be damaged, and a size of the fixed battery cell assembly is small.

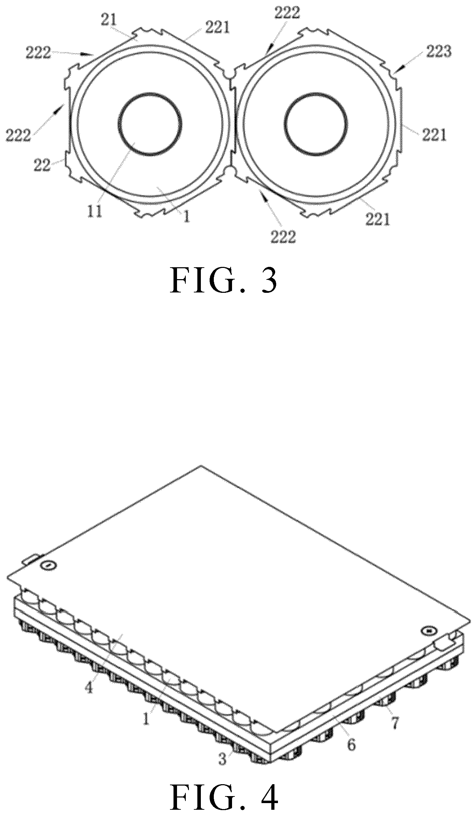

As shown in FIG. 2 and FIG. 3, the end covers 2 and the bases 3 are regular prismatic structures, so that each of the end covers 2 and the bases 3 includes an axial end face and a plurality of side walls. Each of side walls of the end covers 2 and side walls of the bases 3 is provide with a clamping part. Each of the end covers 2 may be clamped to multiple end covers 2 in a circumferential direction through its side walls, and opposite side walls of two adjacent end covers 2 can be clamped and fixed, thus increasing a number of the end covers 2 that can be connected by a single end cover 2, so as to make a splicing structure of the plurality of end covers 2 more compact. Similarly, each of the bases 3 may be clamped to multiple bases 3 in a circumferential direction through its side walls, and opposite side walls of two adjacent bases 3 can be clamped and fixed, thus increasing a number of the bases 3 that can be connected by a single base 3, so as to make a splicing structure of the plurality of bases 3 more compact.

The end covers 2 are taken as an example to describe structures as following, and the bottom plate 20 in the end cover 2 is defined as an end cover bottom plate 21. The end cover bottom plate 21 is a polygonal plate, each of side edges of the end cover bottom plate 21 is connected to one of the side plates 22, and the end cover bottom plate 21 and the plurality of side plates 22 enclose to define the installation slot 24. Each of the side plates 22 is provided with the clamping part. It can be understood that, on a basis that a size of the end cover 2 along a radial direction of the battery cell 1 remains unchanged, an area of the end cover bottom plate 21 when it is polygonal is less than an area of the end cover bottom plate 21 when it is circular, which can save space and materials required for processing the end cover 2, and thus be beneficial to reduce cost.

The end cover bottom plate 21 is a rectangular plate or a regular hexagon plate so as to facilitate splicing of the plurality of end covers 2. Rectangular plates and regular hexagon plates can be respectively spliced into a relatively complete rectangular region, and a shape of a spliced region is a standard shape, which is convenient for planning an installation location of the battery cell module in the battery system, and is beneficial to improve space utilization.

In the embodiment, among two opposite ones of the side plates 22 in two adjacent end covers 2, a first one of the side plates 22 is provided with a clamping block 221 as the clamping part, and a second one of the side plates 22 is provided with a clamping slot 222 as the clamping part. The clamping block 221 can be stuck in the clamping slot 222 to realize fixation of the two adjacent end covers 2. A shape and a size of the clamping block 221 are matched with a shape and a size of the clamping slot 222, so that when the clamping block 221 is stuck in the clamping slot 222, outer contours of the two side plates 22 directly opposite are overlapped, so as to reduce a splicing gap and make the splicing more compact.

For example, the clamping slot 222 penetrates through two ends of the side wall 22 along an axial direction of the battery call 1, so that the clamping slot 222 is defined as a through-slot. The above arrangement enables the clamping block 221 to move in both a positive direction and a negative direction along the axial direction of the end cover 2, so as to be engaged with or disengaged from the clamping slot 222, which is more convenient for an installation.

In addition, errors of a size of the clamping block 221 and a size of the clamping slot 222 can be compatible by defining the clamping slot 222 as the through-slot. For example, when the size of the clamping block 221 is greater than the size of the clamping slot 222 along the axial direction of the battery cell 1, a matching location of the clamping block 221 and the clamping slot 222 along the axial direction can be adjusted to make axial end faces of adjacent end covers 2 or axial end faces of adjacent battery cells 1 flush, so as to ensure relative position accuracy of the plurality of battery cells 1 after they are grouped.

In the embodiment, a width of the clamping slot 222 is gradually increased towards inside of the installation slot 24 along the radial direction of the battery cell 1, and a shape of the clamping block 221 is matched with a shape of the clamping slot 222, so that an inner wall of the clamping slot 222 can prevent the clamping block 221 from pulling out of the clamping slot 222 along the radial direction of the battery cell 1 after the clamping block 221 is engaged with the clamping slot 222, which is beneficial to improve an engagement effect between the clamping block 221 and the clamping slot 222.

For example, the clamping slot 222 is defined as a trapezoidal slot, and a sectional shape of the clamping block 221 along the radial direction of the battery cell 1 is trapezoidal.

Among the two opposite ones of the side plates 22 in two adjacent end covers 2, the first one of the side plates 22 is provided with the clamping block 221, and the second one of the side plates 22 is provided with the clamping slot 222. That is, only one type of the end cover 2 needs to be manufactured in the battery cell module, which is beneficial to reduce processing cost and facilitate splicing.

In the embodiment, the end cover 2 is a regular hexagonal prism structure, three adjacent side plates 22 are provided with the clamping blocks 221, and the other three adjacent side plates 22 are provided with the clamping slots 222.

Since the battery cell 1 is cylindrical, side surfaces of the side plates 22 facing the battery cell 1 are arc-shaped surfaces matched with an outer wall of the battery cell 1 so as to improve fixing and position effects of the installation slot 24 on the battery cell 1. That is, the installation slot 24 is a cylindrical slot. Side surfaces of the side plates 22 away from the battery cell 1 are planes to facilitate a processing of the clamping block 221 and the clamping slot 222 on the side plates 22, so as to reduce processing difficulty and improve processing accuracy of the clamping block 221 and the clamping slot 222, thereby making the splicing structure of two adjacent end covers 2 more compact.

Since the side surfaces of the side plates 22 away from the battery cell 1 are planes, and the side surfaces of the side plate 22 facing the battery cell 1 are arc-shaped surfaces, a thickness of the side plate 22 is uneven. A thickness at a connection location of two side plates 22 is greater, and a thickness at a middle location of the side plate 22 is less. In order to reduce a size and processing cost of the battery cell module after the end covers 2 are spliced, a distance between the side plate 22 and an axis of the battery cell 1 is designed to be as small as possible, resulting in a thin thickness in middle portion of the side plate 22, which makes it difficult to process the middle portion of the side plate 22, has a poor strength, and is prone to deformation or fracture.

In order to solve the above problems, as shown in FIG. 2, the middle portion of each of the side plates 22 in the embodiment is provided with a notch 225. An opening of the notch 225 on the end cover 2 faces the base 3, and an opening of the notch 225 on the base 3 faces the end cover 2. By disposing the notches 225, thinner portions of the side plates 22 may be removed, and thicker and stronger portions of the side plates 22 may be retained, thereby reducing processing difficulty of the end covers 2, improving strength of the end covers 2, saving materials, and helping to reduce cost.

In the embodiment, the notch 225 is extended to the end cover bottom plate 21, so that each of the side plates 22 includes two extension arms disposed at intervals, and the extension arms of two adjacent side plates 22 are connected and located at a corner of the end cover bottom plate 21.

It can be understood, each of the bases 3 similarly includes a bottom plate 20 and a plurality of side plates 22. The bottom plate 20 in the base is defined as a base bottom plate 31. shapes, structures, and connection relation of base bottom plate 31 and side plates 22 can be referred to the end cover 2, which will not be described in the embodiment.

In the embodiment, each of the end covers 2 and the bases 3 is an integrated forming structure to facilitate processing and reduce cost.

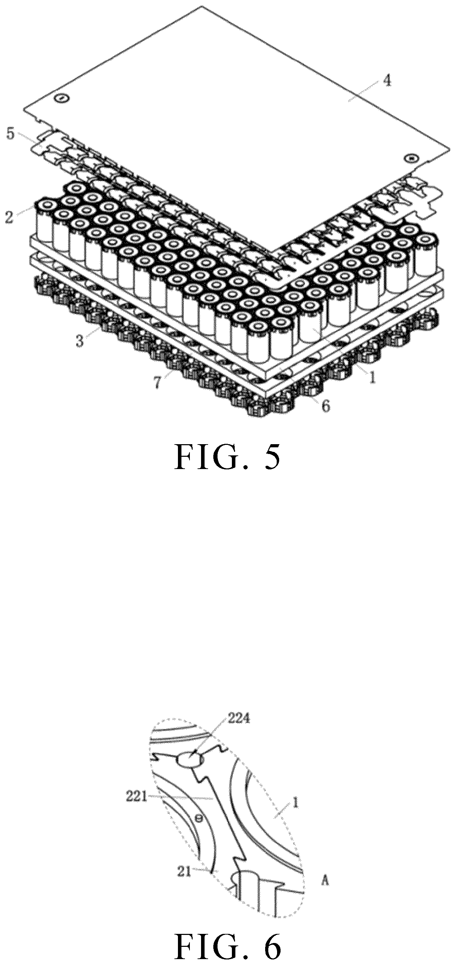

In the embodiment, as shown in FIG. 4 and FIG. 5, the battery cell module further includes a foam adhesive layer 6 and a structural adhesive layer 7. The foam adhesive layer 6 and the structural adhesive layer 7 are disposed between the upper shelf and the lower shelf to fill the gap between adjacent battery cells 1, so as to make positions of battery cells 1 more stable. The foam adhesive layer 6 and the structural adhesive layer 7 are functioned with cushioning, so as to reduce impact of vibration on the battery cells 1, the bases 3, and the end covers 2, and improve the stability of the battery cell module.

In order to facilitate formations of the foam adhesive layer 6 and the structural adhesive layer 7, as shown in FIG. 6, adjacent end covers 2 are spliced and enclosed to define a glue injection hole 224. The glue injection hole 224 is configured to pass glue into the gap between adjacent battery cells 1.

As shown in FIG. 3 and FIG. 6, in the embodiment, the end cover 2 is a regular hexagonal prism, and three adjacent end covers 2 are spliced to define the glue injection hole 224. The glue injection hole 224 is a through hole extending along the axial direction of battery cell 1. A connection portion of two adjacent side plates 22 in the end cover 2 is provided with an arc groove 223 to facilitate enclosing the glue injection hole 224, and a central angle of the arc groove 223 is 120° .

Optionally, each of a thickness of the foam adhesive layer 6 and a thickness of the structural adhesive layer 7 ranges from 5mm to 30mm, such as, 10 mm, 15 mm, 20 mm, or 25 mm, so as to achieve better fixing of the battery cells 1 and better cushioning.

The battery cell module further includes a module cover 4 and an integrate assembly 5. The integrate assembly 5 is disposed on the upper shelf, and the module cover 4 is disposed on the integrate assembly 5. The integrate assembly 5 includes a busbar 51 configured to conduct the plurality of battery cells 1 in series or parallel. The module cover 4 acts as insulation to avoid short circuit between the integrate assembly 5 and external metals.

Optionally, as shown in FIG. 2 and FIG. 3, the end cover bottom plate 21 of the cover plate 2 is provided with a first via hole 211, an end of the battery cell 1 coupled with the cover plate 2 is provided with an electrode column 11, and the electrode column 11 is extended out of the end cover 2 from the first via hole 211 to connect with the busbar 51, so that the plurality of battery cells 1 are connected in series or parallel by the busbar 51.

Since the end cover bottom plate 21 of the end cover 2 is provided with the first via hole 211, and the first via hole 211 is matched with the electrode column 11, if glues overflows to cover the outer wall of the cover plate 21 or the electrode column 11 during a bonding process, a conduction effect between the electrode column 11 and the busbar 51 will be affected. Therefore, a removing process of the glues needs to be added after the bonding process, which not only increases processing procedures and cost, but also easily damages the battery cell 1 during the removing process of the glues.

To avoid the above problem, the end cover 2 in the embodiment is fixedly bonded with the battery cell 1 by the side plates 22. On one hand, a distance between a location for applying the glues and the cover plate 21 can be increased to prevent an overflow of the glues from covering the cover plate 21 or the electrode column 11. On the other hand, the location for applying the glues is defined on the side plates 22, and an operation for adding glues may be processed through an opening of the installation slot 24 and the notch 225, which is more convenient for operation.

In order to improve a fixing effect of the end cover 2 and the battery cell 1, a bonding area between the side plates 22 and the battery cell 1 ranges from 50% to 80% of a contact area between the side plates 22 and the battery cell 1, such as 55%, 60%, 65%, 70%, or 75%.

In order to facilitate an extension of an end of the battery cell 1 inside the installation slot 24, the installation slot 24 is disposed in clearance fit with the battery cell 1 to facilitate assembly of the battery cell 1 and the end cover 2.

In order to ensure certain contact pressure between the side plates 22 and the battery cell 1 to improve a bonding effect, optionally, a fit clearance between the installation slot 24 and the battery cell 1 ranges from 1 mm to 2 mm, such as 1.2 mm, 1.4 mm, 1.6 mm, or 1.8 mm.

### Embodiment 2

In order to ensure that the battery cell module can work normally, the busbar 51 needs to be insulated from the shell of each of the battery cells 1. In the related art, an insulation is generally performed on the busbar 51 to realize an insulation between the busbar 51 and the shell of the battery cell 1, which greatly increases cost of the battery cell module.

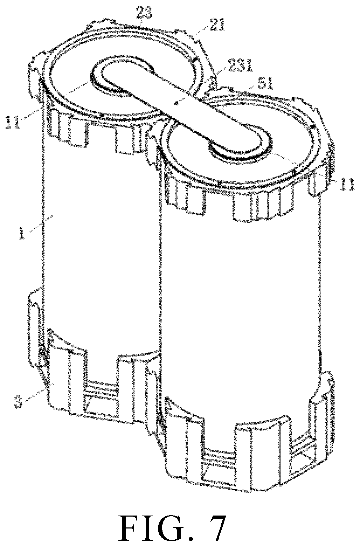

To solve the above problem, as shown in FIG. 7, a battery system is provided in the embodiment, which is improved on basis of Embodiment 1. Each of the end covers 2 is made of an insulating material, which can separate a shell of the battery cell 1 from the busbar 51, and be beneficial to improve reliability of the battery cell module.

Optionally, the end cover 2 may be made of a plastic material with low cost and light weight. For example, the end cover 2 is integrally molded through an injection molding process to simplify processing steps.

The busbar 51 in the embodiment does not need to be insulated, which is beneficial to reduce processing cost. By separating the busbar 51 from the shell of the battery cell 1 via the end cover 2, an insulation effect between the busbar 51 and the shell of the battery cell 1 is great.

The end cover bottom plate 21 is provided with a flange 23 surrounding the first via hole 211. The flange 23 is configured to support the busbar 51, which can further increase a distance between the busbar 51 and the shell of the battery cell 1, so that the insulation effect between the busbar 51 and the shell of the battery cell 1 is better.

Optionally, the end cover bottom plate 21 or the flange 23 may be provided with a position column 231 matched with the busbar 51, and the busbar 51 may be provided with a position hole. When the busbar 51 is installed, the position column 231 is extended into the position hole to limit a location of the busbar 51 through an engagement of the position column 231 with the position hole, so as to improve a position effect of the busbar 51, thereby avoiding a separation of the busbar 51 from the electrode column 11 or a contact of the busbar 51 and the shell of the battery cell 1 due to external forces. A connection between the position column and the position hole may be either clamped or riveted.

In addition, after the battery cell 1 and end cover 2 are the assembled, an end face of the battery cell 1 abuts against the flange 23, so that the flange 23 can position the battery cell 1, which facilitates an adhesive bonding between the side plates 22 and a side of the battery cell 1.

### Embodiment 3

Heat is generally generated during an operation of the battery cell 1. If a temperature of the battery cell 1 is too high to occur a thermal runaway, gas with a high pressure will be generated in the battery cell 1. If the gas cannot be discharged quickly, a risk of explosion will exist in the battery cell 1 with an increase of atmospheric pressure.

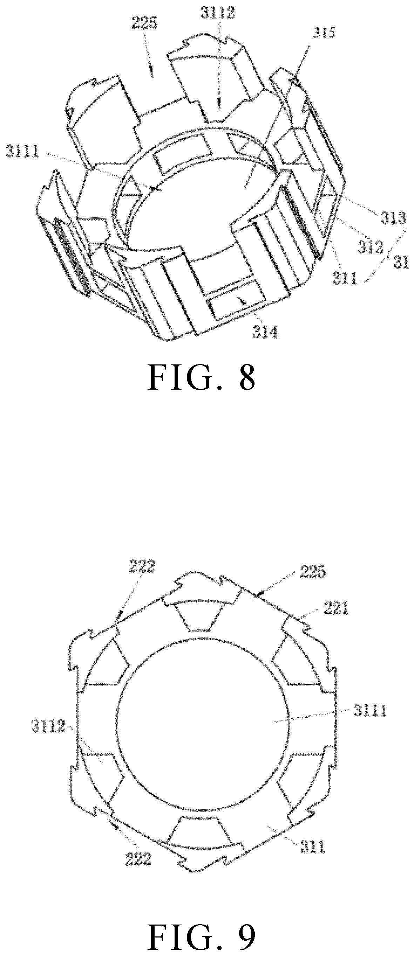

In order to ensure safe use of the battery cell module, a battery system is provided in the embodiment, which is improved on basis of Embodiment 1 and Embodiment 2. As shown in FIG. 8 and FIG. 9, a structure of the base bottom plate 31 in the base 3 is different from a structure of the end cover bottom plate 21 in the end cover 2, so that the base 3 includes the installation slot 24 and a pressure relief cavity 315 communicated with each other. The second end of the battery cell 1 is disposed in the installation slot 24 and abuts against a bottom of the installation slot 24. And the pressure relief cavity 315 is provided with a plurality of pressure relief holes 314.

When a thermal runaway occurs in the battery cell 1, an explosion-proof valve located at a bottom portion of the battery cell 1 bursts, so that gas and ejecta generated inside the battery cell 1 can enter the pressure relief cavity 315 from the installation slot 24 and be discharged through the plurality of pressure relief holes 314, so as to achieve a goal of no fire and no explosion of the battery cell 1 under circumstance of the thermal runaway, thus ensuring safe use of the battery cell module and greatly reducing impacts on other battery cells 1.

In order to ensure a pressure relief effect of the pressure relief cavity 315 and enable the explosion-proof valve located at the bottom portion of the battery cell 1 to be opened effectively, the pressure relief cavity 315 needs to have a space. Optionally, a height of the pressure relief cavity 315 ranges from 5 mm to 20 mm, such as 10mm, 12mm, 15mm, or 18mm. The pressure relief effect of the pressure relief cavity 315 is great when the height of the pressure relief cavity 315 is within the above range.

The base bottom plate 31 in the base 3 is a double-layer structure with the pressure relief cavity 315 defined therein. A top surface of the base bottom plate 31 is provided with a second via hole 3111 communicated with the pressure relief cavity 315. The installation slot 24 is communicated with the pressure relief cavity 315 by the second via hole 3111. When an end of the battery cell 1 is inserted in the installation slot 24, the explosion-proof valve located at the bottom portion of the battery cell 1 is opposite to the second via hole 3111. When a thermal runaway occurs in the battery cell 1, the second via hole 3111 provides a blasting space for the explosion-proof valve, and the gas and the ejecta generated by the battery cell 1 enter the pressure relief cavity 315 through the second via hole 3111, and then are discharged through the plurality of pressure relief holes 314.

Optionally, the plurality of pressure relief holes 314 are defined on a side surface of the base bottom plate 31 to discharge gas along a radial direction of the battery cell 1, so as to prevent the gas from flowing upward to contact the battery cell 1, which is beneficial to improve a safety performance of the battery cell module.

In order to improve a fixing effect of the battery cell 1 and the base 3, the installation slot 24 is provided with a plurality of gluing slots 3112. The plurality of gluing slots 3112 are configured to accommodate glues, so as to ensure that sufficient glues may be configured to bond the battery cell 1 and the base 3, thereby improving a firmness degree of bonding.

Optionally, the plurality of gluing slots 3112 are defined on a bottom surface of the installation slot 24 to facilitate application of the glues. Compared with applying the glues on the side wall of the installation slot 24, the above arrangement may prevent the glues from flowing around under an action of gravity, so as to prevent the glues from adhering to other locations of the base 3 and the battery cell 1.

The plurality of gluing slots 3112 are disposed adjacent to the side wall of the installation slot 24, that is, the plurality of gluing slots 3112 are disposed at an edge of the base bottom plate 31 to prevent the glues from blocking the second via hole 3111 and affecting pressure relief.

In the embodiment, the plurality of gluing slots 3112 are arranged at intervals along a circumferential direction of the base bottom plate 31. By disposing the plurality of gluing slots 3112, a plurality of bonding locations are defined between the battery cell 1 and the base 3, and the plurality of bonding locations are close to an edge of the battery cell 1 along a radial direction of the battery cell 1, which is beneficial to improve a firmness degree of fixation.

The base bottom plate 31 includes an upper plate 311, a lower plate 312, and a plurality of reinforcing blocks 313. The upper plate 311 is disposed opposite to and at intervals with the lower plate 312 to define the pressure relief cavity 315. The second via hole 3111 penetrates through the upper plate 311 and the lower plate 312. The plurality of reinforcing blocks 313 are disposed between the upper plate 311 and the lower plate 312, and are connected to the upper plate 311 and the lower plate 312, respectively, so that the base bottom plate 31 is formed into a whole. When the battery cell 1 is fixed with the base 3, the upper plate 311 is configured to support an end surface of the second end of the battery cell 1, and the plurality of gluing slots 3112 are defined on the upper plate 311, so that the battery cell 1 is fixedly bonded with the upper plate 311. In the embodiment, the pressure relief cavity 315 includes a cylindrical cavity below the second via hole 3111 and a cavity between every two adjacent reinforcing blocks 313.

The plurality of reinforcing blocks 313 are located below the plurality of gluing slots 3112 to ensure that each of the plurality of gluing slots 3112 is defined with a certain depth to accommodate more glues, and the plurality of gluing slots 3112 are extended downward into the plurality of reinforcing blocks 313 one by one to ensure that each of the plurality of gluing slots 3112 has a sufficient depth.

In addition, the plurality of reinforcing blocks 313 is disposed below the plurality of gluing slots 3112, which is further beneficial to improve strength of the base bottom plate 31, so as to ensure that the base bottom plate 31 has sufficient capacity to support the battery cell 1.

In the embodiment, the plurality of reinforcing blocks 313 are disposed at intervals along the circumferential direction of the second via hole 3111, and one of the pressure relief holes 214 is formed between every two adjacent reinforcing blocks 313, so that the pressure relief cavity 315 is communicated with outside.

In order to improve the fixing effect of the base 3 and the battery cell 1, a bonding area between the base bottom plate 31 and the battery cell 1 ranges from 50% to 80% of a contact area between the base bottom plate 31 and the battery cell 1, such as 60%, 65%, 70%, or 75%.

In order to facilitate an extension of an end of the battery cell 1 inside the installation slot 24, the installation slot 24 is disposed in clearance fit with the battery cell 1 to facilitate assembly of the battery cell 1 and the base 3.

In order to ensure certain contact pressure between the side plates 22 and the battery cell 1 to improve a bonding effect, optionally, a fit clearance between the installation slot 24 and the battery cell 1 ranges from 1 mm to 2 mm, such as 1.2 mm, 1.4 mm, 1.5 mm, 1.7 mm, or 1.9 mm.

Optionally, the plurality of gluing slots 3112 are extended to the plurality of side plates 22 one by one, so that redundant glues adhered on the battery cell 1 may be squeezed to the plurality of side plates 22 after an end of the battery cell 1 is placed into the installation slot 24, thereby increasing the bonding area between the battery cell 1 and the base 3, so as to improve the bonding effect.

Optionally, a width of each of the gluing slots 3112 is gradually increased towards outside of the installation slot 24 along a radial direction of the second via hole 3111. The above arrangement makes less glues close to the second via hole 3111 and more glues close to the side plates 22, so as to prevent from blocking the via hole after the glues are overflowed. Compared with a case that the width of each of the plurality of gluing slots 3112 remains unchanged, the above arrangement may increase amount of the glues applied to improve the bonding and the fixation effects.

The battery system provided in the application adopts the above battery cell module, with high processing accuracy and a reliable structure.

## Claims

1. A battery cell module, comprising a plurality of battery cell assemblies, wherein each of the battery cell assemblies comprises a battery cell (1), an end cover (2), and a base (3), a first end of the battery cell (1) is connected to the end cover (2), and a second end of the battery cell (1) is connected to the base (3); end covers (2) of adjacent ones of the battery cell assemblies are detachably connected to each other, and bases (3) of the adjacent ones of the battery cell assemblies are detachably connected to each other.

2. The battery cell module of claim 1, wherein the end covers (2) and the bases (3) are provided with clamping parts, adjacent two of the end covers (2) are clamped through the clamping parts, and adjacent two of the bases (3) are clamped through the clamping parts.

3. The battery cell module of claim 2, wherein the end covers (2) and the bases (3) are prismatic structures, and each of side walls of the end covers (2) and side walls of the bases (3) is provided with one of the clamping parts.

4. The battery cell module of claim 3, wherein each of the end covers (2) and the bases (3) comprises:
a bottom plate (20), the bottom plate (20) being a regular polygonal plate; and
a plurality of side plates (22), wherein each of side edges of the bottom plate (20) is connected to one of the side plates (22), and each of the side plates (22) is provided with one of the clamping parts.

5. The battery cell module of claim 4, wherein a quantity of the plurality of side plates (22) is an even number, among two opposite ones of the side plates (22), a first one of the side plates (22) is provided with a clamping block (221) as the clamping part, and a second one of the side plates (22) is provided with a clamping slot (222) as the clamping part.

6. The battery cell module of claim 5, wherein a width of the clamping slot (222) is gradually increased along a radial direction of the battery cell (1) towards inside of one of the side plates where the clamping slot (222) is located, and a shape of the clamping block (221) is matched with a shape of the clamping slot (222).

7. The battery cell module of claim 3, wherein the end covers (2) and the bases (3) are regular hexagonal prism structures.

8. The battery cell module of any one of claim 4 to claim 7, wherein the battery cells (1) are cylindrical; and
each of the end covers (2) and the bases (3) is provided with an installation slot (24), the plurality of side plates (22) and the bottom plate (20) enclose to define the installation slot (24); each of ends of the battery cells (1) is disposed in a corresponding one of installation slots (24), a side surface of the installation slot (24) facing the battery cell (1) is an arc-shaped surface matched with an outer wall of the battery cell (1), and a side surface of the installation slot (24) away from the battery cell (1) is a plane.

9. The battery cell module of claim 8, wherein each of middle portions of the side plates (22) of the end cover (2) and middle portions of the side plates (22) of the base (3) is provided with a notch (225), an opening of the notch (225) on the end cover (2) faces the base (3), and an opening of the notch (225) on the base (3) faces the end cover (2).

10. The battery cell module of any one of claim 1 to claim 7, wherein the end cover (2) is sleeved at the first end of the battery cell (1), a first via hole (211) is defined on the end cover (2), and an electrode column (11) of the battery cell (1) is extended out of the end cover (2) from the first via hole (211) to connect with a busbar (51).

11. The battery cell module of claim 10, wherein the end cover (2) is made of an insulating material and capable of supporting the busbar (51).

12. The battery cell module of claim 10, wherein a bottom plate (20) of the end cover (2) is an end cover bottom plate (21), the first via hole (211) is defined on the end cover bottom plate (21), and the end cover bottom plate (21) is provided with a flange (23) surrounding the first via hole (211), and the flange (23) is configured to support the busbar (51).

13. The battery cell module of claim 12, wherein the flange (23) is provided with a position column (231) matched with the busbar (51).

14. The battery cell module of any one of claim 4 to claim 7, wherein the bottom plate (20) of the base (3) is a base bottom plate (31), the plurality of side plates (22) of the base (3) are connected to the base bottom plate (31), the plurality of side plates (22) are circumferentially arranged around the base bottom plate (31) to define the installation slot (24), and the second end of the battery cell (1) is disposed in the installation slot (24); and
the base (3) further comprises a pressure relief cavity (315) communicated with the installation slot (24).

15. The battery cell module of claim 14, wherein the pressure relief cavity (315) is defined in the base bottom plate (31), and the base bottom plate (31) is provided with a second via hole (3111) communicated with the pressure relief cavity (315).

16. The battery cell module of claim 15, wherein the pressure relief cavity (315) is provided with a plurality of pressure relief holes (314), and the plurality of pressure relief holes (314) are respectively defined on the base bottom plate (31).

17. The battery cell module of claim 15, wherein the base bottom plate (31) further comprises:
an upper plate (211), configured to support the battery cell (1);
a lower plate (212) disposed opposite to and at intervals with the upper plate (211), wherein the pressure relief cavity (315) is defined between the top plate (211) and the bottom plate (212), and the second via hole (3111) penetrates through the upper plate (211) and the lower plate (212); and
a plurality of reinforcing blocks (313) disposed between the upper plate (211) and the lower plate (212) and arranged at intervals along a circumferential direction of the second via hole (3111), wherein one of the pressure relief holes (314) is defined between every two adjacent ones of the reinforcing blocks (213).

18. The battery cell module of claim 15, wherein a height of the pressure relief cavity ranges from 5 mm to 20 mm.

19. The battery cell module of claim 14, wherein both ends of the battery cell (1) are fixedly bonded respectively with the end cover (2) and the base (3).

20. The battery cell module of claim 19, wherein the base bottom plate (31) of the base (3) is provided with a plurality of gluing slots (3112).

21. The battery cell module of claim 20, wherein the plurality of gluing slots (3112) are disposed on a top surface of the base bottom plate (31) in contact with the second end of the battery cell (1) and adjacent to an inner wall of the installation slot (24) of the base (3).

22. The battery cell module of claim 21, wherein the pressure relief cavity (315) is provided with a plurality of reinforcing blocks (313) therein, each of the plurality of reinforcing blocks (313) is respectively connected with a top surface and a bottom surface of the pressure relief cavity (315), and the plurality of gluing slots (3112) are disposed on and extended into the plurality of reinforcing blocks (313) one by one.

23. The battery cell module of claim 21, wherein a width of each of the gluing slots (3112) is gradually increased towards outside of the installation slot (24) along a radial direction of the battery cell (1).

24. The battery cell module of any one of claim 1 to claim 7, wherein at least two adjacent ones of the end covers (2) are connected and enclosed into a glue injection hole (224).

25. The battery cell module of any one of claim 1 to claim 7, wherein the battery cell module further comprises a foam adhesive layer (6) and a structural adhesive layer (7) stacked, and the foam adhesive layer (6) and the structural adhesive layer (7) are molded through the glue injection hole (224).

26. A battery system, comprising the battery cell module of any one of claim 1 to claim 25.
